(19) Europäisches Patentamt

European Patent Office

Office européen des brevets

(11) **EP 1 471 339 A2**

(12) **EUROPEAN PATENT APPLICATION**

(43) Date of publication:
27.10.2004 Bulletin 2004/44

(51) Int Cl.⁷: **G01L 5/10**

(21) Application number: 04007809.9

(22) Date of filing: 31.03.2004

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **31.03.2003 JP 2003097039**

(71) Applicant: **Kabushiki Kaisha Toyota Jidoshokki Kariya-shi, Aichi-ken (JP)**

(72) Inventors:
• **Umemura, Satoshi**
  **2-1, Toyoda-cho, Kariya-shi, Aichi-ken (JP)**

• **Matsubara, Ryo**
  **2-1, Toyoda-cho, Kariya-shi, Aichi-ken (JP)**
• **Hirose, Tatsuya**
  **2-1, Toyoda-cho, Kariya-shi, Aichi-ken (JP)**
• **Hashimoto, Yuji**
  **2-1, Toyoda-cho, Kariya-shi, Aichi-ken (JP)**

(74) Representative:
**Leson, Thomas Johannes Alois, Dipl.-Ing.**
**Patentanwälte**
**Tiedtke-Bühling-Kinne & Partner,**
**Bavariaring 4**
**80336 München (DE)**

(54) **Tension detection apparatus of endless loop power transferring member and torque detection apparatus using the same**

(57)    A deformation member (19) is located between a supporting member (11) and a bearing (20). A deformation detection device detects the amount of deformation of the deformation member (19) at at least two positions that are spaced from each other in a circumferential direction. Based on the deformation amount, a computer computes unbalanced load that is applied to the supporting member (11) by the tension of a belt (18). The computer computes tension of an advancing section and tension of a trailing section of the belt (18) in the moving direction of the belt (18) with respect to a section of the belt (18) engaged with a rotor. Therefore, the strength of the supporting member (11) is maintained while improving the detection accuracy.

## Fig.1

**Description**

BACKGROUND OF THE INVENTION

The present invention relates to a tension detection apparatus of an endless loop power transferring member used for transmitting torque from a drive source to a driven device and a torque detection apparatus using the same.

For example, a vehicle has auxiliary devices, or driven devices, that are driven by a drive source, or an engine, by way of an endless loop power transferring member,. Such devices include a compressor in a refrigeration circuit of a vehicle air conditioner (for example, Japanese Laid-Open Patent Publication No. 2001-132634). In the technique disclosed in Japanese Laid-Open Patent Publication No. 2001-132634, a magnetic piece is attached to a pulley, which rotates integrally with a rotary shaft. Alternatively, a piezoelectric element is embedded in a shock absorbing rubber member located between a rotary shaft and a pulley. The magnetic piece or the piezoelectric element is deformed by applied torque. Such deformation is converted into an electric signal. The signal is sent to a primary coil of a transformer provided on the pulley, and then sent to a secondary coil located on a housing of a compressor, through a wire attached to the pulley. However, attaching the wire to the pulley, or a rotor, is troublesome.

In Japanese Laid-Open Patent Publication No. 2001-132634, a magnetic piece is attached to a pulley, and a magnetic sensor is provided at a part of the housing that faces the magnetic piece. There have been proposed techniques in which a magnetic sensor detects changes in flux created by a magnetic piece to detect torque.

However, when a member for detecting torque, such as a magnetic piece or a piezoelectric element, is attached to a rotor, the rotor becomes unbalanced. Therefore, it is not desirable to provide a rotor with a member for detecting torque.

The pulley of Japanese Laid-Open Patent Publication No. 2001-132634 is rotatably supported by a boss of the housing through which the rotary shaft extends. Thus, unbalanced load acting on the pulley due to torque acts on the boss, or a supporting member, through a bearing. Therefore, for example, it may be configured that deformation of the boss is detected, and torque is detected by referring to the correlation between the unbalanced load and the torque.

However, since the boss is part of the housing and rigid, the boss is not easily deformed. This results in low detection accuracy. Forming the boss to be easily deformed degrades the strength of the boss. That is, if the configuration in which deformation of the boss is detected is used, the requirements for the strength of the boss and the detection accuracy cannot be simultaneously satisfied. Such a configuration is therefore not desirable.

SUMMARY OF THE INVENTION

Accordingly, it is an objective of the present invention to provide an improved tension detection apparatus of an endless loop power transferring member and a torque detection apparatus using the same.

To achieve the above-mentioned objective, the present invention provides a tension detection apparatus. The apparatus detects tension acting on an endless loop power transferring member that transfers torque from a drive source to at least one driven device. The apparatus includes a supporting member and a bearing attached to the supporting member. A rotor is rotatably supported by the supporting member with the bearing in between. The power transferring member is engaged with the rotor. A deformation member is located between the supporting member and the bearing. The amount of deformation of the deformation member varies in accordance with the tension of the power transferring member. A deformation detection device detects the deformation amount of the deformation member at at least two positions that are spaced from each other in a circumferential direction of the bearing. Based on the deformation amount detected by the deformation detection device, a computer computes unbalanced load that is applied to the supporting member by the tension of the power transferring member through the rotor, the bearing, and the deformation member. Based on the computed unbalanced load, the computer computes the tension of the power transferring member.

According to another aspect of the invention, a torque detection apparatus for detecting torque transmitted to a driven device by a drive source through an endless loop power transferring member is provided. The driven device has a housing and a rotor. The rotor is rotatably supported by the housing with a bearing. A section of the power transferring member is engaged with the rotor. The apparatus includes a deformation member located between the housing and the bearing. The amount of deformation of the deformation member varies in accordance with the tension of the power transferring member. A deformation detection device detects the deformation amount of the deformation member at at least two positions that are spaced from each other in a circumferential direction of the bearing. Based on the deformation amount detected by the deformation detection device, a computer computes unbalanced load that is applied to the housing by the tension of the power transferring member through the rotor, the bearing, and the deformation member. Based on the computed unbalanced load, the computer computes tension of an advancing section and tension of a trailing section of the power transferring member in the moving direction of the power transferring member with respect to the rotor. Based on the difference between the computed tensions, the computer computes the torque.

Other aspects and advantages of the invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferred embodiments together with the accompanying drawings in which:

Fig. 1 is a cross-sectional view illustrating a power transmission mechanism according to one embodiment of the present invention;
Fig. 1A is an enlarged view illustrating the tension detection apparatus of Fig. 1;
Fig. 2 is a perspective view illustrating a tolerance ring;
Fig. 3 is a diagrammatic partially cross-sectional view taken along line III-III of Fig. 1; and
Fig. 4 is a diagrammatic view showing the relationship between a crankshaft and auxiliary devices.

DETAILED DESCRIPTION OF THE PREFERRED EMBODIMENTS

One embodiment of the present invention will now be described.

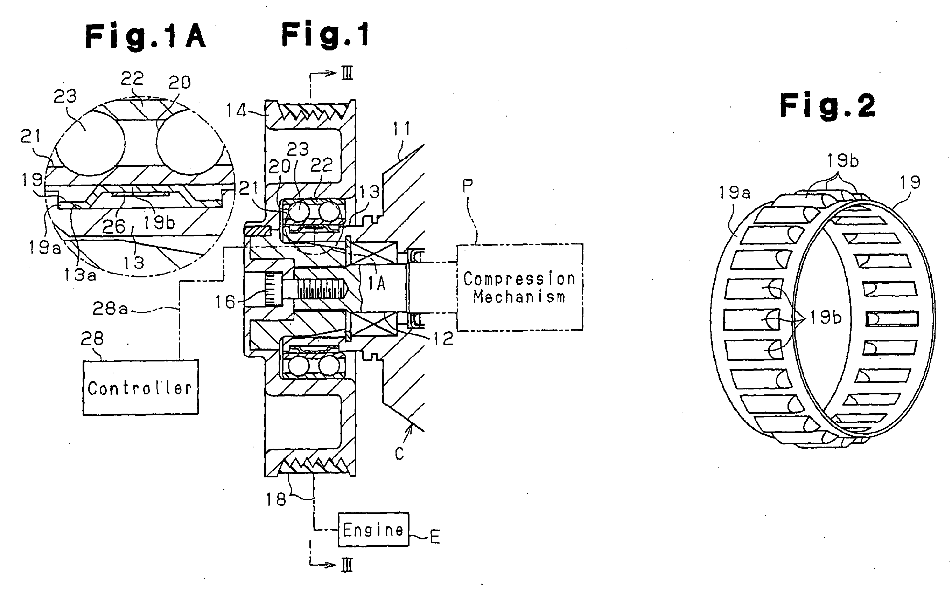

As shown in Fig. 1, a power transmission mechanism is provided between an engine E, which is a drive source of a vehicle, and a refrigerant compressor C of a refrigeration cycle of a vehicle air conditioner. The compressor C has a housing 11. A compression mechanism P is accommodated in the housing 11. A rotary shaft 12 for driving the compression mechanism P is rotatably supported by the housing 11. A supporting member, which is a boss 13, is formed on the housing 11. The rotary shaft 12 extends through the boss 13. A rotor, which is a compressor pulley 14, is fixed to an end of the rotary shaft 12 by fastening a bolt 16. The compressor pulley 14 and the rotary shaft 12 rotate integrally.

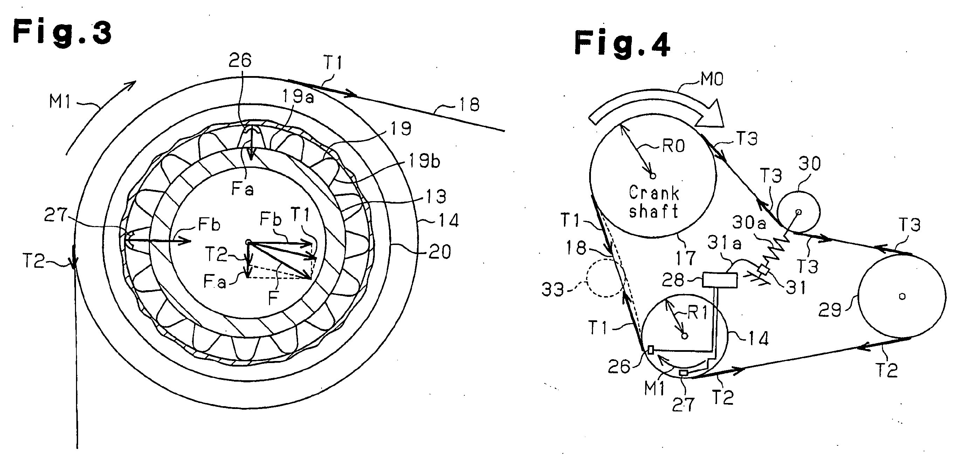

A crankshaft pulley 17 (see Fig. 4) is fixed to a crankshaft of the engine E. The crankshaft pulley 17 rotates integrally with the crankshaft. An endless loop power transferring member, which is an endless belt 18, is engaged with the outer circumference of the compressor pulley 14 and the crankshaft pulley 17. Therefore, power of the engine E, or torque, is transmitted to the rotary shaft 12 by way of the belt 18 and the compressor pulley 14, which causes the compression mechanism P to compress refrigerant gas. The compression mechanism P may be of a piston type, a scroll type, or a vane type. Further, the compression mechanism P may be of a fixed displacement type or a variable displacement type.

As shown in Fig. 1 and Fig. 1A, a ring groove 13a is formed in the outer circumference of the boss 13. A tolerance ring 19, which functions as a deformation member and an annular member, is located in the ring groove 13a.

As shown in Fig. 2, the tolerance ring 19 includes a cylindrical portion 19a and curved portions 19b protruding radially outward from the cylindrical portion 19a. The tolerance ring 19 is made of metal, for example, steel.

As shown in Fig. 1, a bearing 20 is located radially outward of the tolerance ring 19. The compressor pulley 14 is rotatably supported by the boss 13 with the bearing 20 and the tolerance ring 19. The boss 13 does not contact the bearing 20. The bearing 20 is a roller bearing and includes an inner race 21, an outer race 22, and rolling bodies, which are balls 23 in this embodiment. The balls 23 are located between the races 21, 22. The tolerance ring 19 is installed to be located between the boss 13 of the housing 11 and the inner race 21 of the bearing 20, such that the curved portions 19b are deformed radially inward when the engine E is not running.

In Fig. 3, for purposes of illustration, the rotary shaft 12, which is located radially inward of the boss 13, is omitted. Also, the number of the curved portions 19b is less than the actual number in Fig. 3.

As shown in Fig. 3, deformation sensors, which are two strain gauges 26, 27, are each attached to different one of the curved portions 19b of the tolerance ring 19. The strain gauges 26, 27 function as a strain detection device. The strain gauges 26, 27 are each attached to the radially inner surface of the corresponding curved portion 19b such that the strain gauges 26, 27 are spaced apart by $90°$. The output data of the strain gauges 26, 27 are sent to a controller 28, which is a computer, through a wire 28a indicated by a two-dot chain line.

As shown in Fig. 3, the controller 28 computes unbalanced load F acting on the boss 13 based on the output data of the strain gauges 26, 27. The unbalanced load F acts on the boss 13 according to the tension of the belt 18 through the compressor pulley 14, the bearing 20, and the tolerance ring 19. Based on the computed unbalanced load F, the controller 28 computes the tension T1, T2 of the belt 18. The tolerance ring 19, the strain gauges 26, 27, and the controller 28 form a tension detection apparatus of the endless loop power transferring member, which is the belt 18. Based on the computed tension T1, T2 of the belt 18, the controller 28 computes compressor torque M1, which is transmitted from the engine E to the compressor C through the belt 18. Therefore, the tension detection apparatus also functions as a torque detection apparatus that computes the torque transmitted to an auxiliary device, or a driven device (a compressor C in this embodiment).

The operation of the tension detection apparatus will now be described. When the engine E is running, the belt 18 receives a tension T1 in a trailing section and a tension T2 in an advancing section in the moving direction with respect to the compressor pulley 14. The unbalanced load F, which is the resultant of the tensions T1, T2, acts on the boss 13 by way of the belt 18, the compressor pulley 14, the bearing 20, and the tolerance ring 19. Accordingly, the curved portions 19b of the tolerance ring 19 are deformed by the unbalanced load F from an initial deformed state in which the engine E is not running, and the deformation is measured by the strain gauges 26, 27.

Based on the output data of the strain gauges 26, 27, the controller 28 computes the vector of the unbalanced load F, that is, the magnitude and the direction of the unbalanced load F. Specifically, based on the output data of the strain gauges 26, 27, the controller 28 computes loads Fa, Fb, which loads Fa, Fb act on portions of the tolerance ring 19, to which the strain gauges 26, 27 are attached, from the belt 18 through the compressor pulley 14 and the bearing 20. The controller 28 then computes the resultant of the loads Fa, Fb to compute the unbalanced load F. Since the directions of the tensions T1, T2 are determined based on the orientations of sections of the belt 18 at the advancing and trailing sections of the compressor pulley 14, the controller 28 decomposes the vector of the unbalanced load F to obtain components in the advancing section and the trailing section, thereby obtaining the tensions T1, T2.

When the radius of the compressor pulley 14 is represented by R1 (see Fig. 4), the compressor torque M1 satisfies the following equation.

$$M1 = (T1 - T2) R1 \qquad \text{Equation (1)}$$

Therefore, if the radius R1 is memorized in the controller 28 in advance, the controller 28 is capable of computing the compressor torque M1 from the equation (1) by detecting the tensions T1, T2.

As shown in Fig. 4, in this embodiment, the belt 18 is engaged with the crankshaft pulley 17, the compressor pulley 14, and a power steering pulley 29. The power steering pulley 29 rotates integrally with the rotary shaft of a hydraulic pump in a power steering unit. The compressor pulley 14 is located in a trailing section of the belt 18 in the moving direction with respect to the crankshaft pulley 17. The power steering pulley 29 is located in a trailing section of the belt 18 in the moving direction with respect to the compressor pulley 14, or in an advancing section with respect to the crankshaft pulley 17. The compressor C is a first driven device that is located adjacent to and in a trailing side with respect to a section of the belt 18 that is engaged with the crankshaft pulley 17, or the engine E. The power steering unit is a second driven device that is located adjacent to and in an advancing section with respect to the section of the belt 18. A tension pulley 30 is located at a section of the belt 18 between the crankshaft pulley 17 and the power steering pulley 29. The tension pulley 30 is urged by a spring 30a. The tension pulley 30 and the spring 30a function as a tension applying mechanism that applies tension to the belt 18 so that the belt 18 is not loosened. The tension applying mechanism is located adjacent to the engine E and in the advancing section.

When the engine E is running, a section of the belt 18 at the trailing side of the power steering pulley 29 receives the tension T2, and a section of the belt 18 at the advancing side of the power steering pulley 29 receives a tension T3. The torque for driving the tension pulley 30 is significantly smaller than torque M1 for driving the compressor pulley 14 or the torque for driving the power steering pulley 29 and therefore need not be considered. Thus, a section of the belt 18 at the advancing side of the crankshaft pulley 17 receives the tension T3.

A section of the belt 18 at the trailing side of the crankshaft pulley 17 receives the tension T1. Load torque applied to the engine E by the crankshaft pulley 17 and the power steering pulley 29, that is, a load torque M0 of all the auxiliary devices, which are the compressor C and the power steering unit, is expressed by the following equation when the diameter of the crankshaft pulley 17 is represented by R0.

$$M0 = (T1 - T3) R0 \qquad \text{Equation (2)}$$

The tension T3 is a tension that is applied to the belt 18 by the tension pulley 30, which is urged by the spring 30a. The tension T3 is obtained by detecting the force of the spring 30a with an applied force detection device, which is a load cell 31. The output data of the load cell 31 is sent to the controller 28 through a wire 31a. Therefore, when the tension T1 is obtained with the tolerance ring 19 and the strain gauges 26, 27 in the compressor C, the load torque M0 applied to the engine E by all the auxiliary devices is obtained referring to the relationship between the tension T1, T3 and the load torque M0 (using the equation (2)). The tension detection apparatus of the endless loop power transferring member and the load cell 31 form a torque detection apparatus for detecting the load torque M0 applied to the engine E by all the auxiliary devices.

The above-described embodiment provides the following advantages.

(1) The bearing 20 is provided at the boss 13 (supporting member) of the housing 11 with the tolerance ring 19 in between. The compressor pulley 14 (rotor), with which the belt 18 is engaged, is rotatably supported with the bearing 20. The strain gauges 26, 27 are attached to the tolerance ring 19. The positions of the strain gauges 26, 27 are displaced from each other in the circumferential direction. The controller 28 computes the unbalanced load F based on the output data of the strain gauges 26, 27. The controller 28 then obtains the tensions T1, T2 of the belt 18 at the advancing and trailing sides based on the unbalanced load F.

Therefore, since the compressor torque M1 can be computed based on the tensions T1, T2, no member for detecting torque is required for the pulley 14, that is, no member for detecting torque is attached to the pulley 14, and the compressor pulley 14 is prevented from being unbalanced.

The torque M1 is computed based on detected deformation of the tolerance ring 19, not based on detected deformation of the boss 13. Therefore, the supporting member need not be configured to be easily deformed. Accordingly, the strength of the boss 13 is maintained while improving the detection accuracy.

(2) The deformation member is the tolerance ring 19. Therefore, compared to a case where the deformation member comprises discontinuous members that support the bearing 20 at at least three positions, the illustrated embodiment permits the deformation member to be easily provided by installing the tolerance ring 19 between the boss 13 and the bearing 20. Also, the configuration reduces the number of the components.

(3) The bearing 20 is a roller bearing. The tolerance ring 19 is located between the boss 13 and the inner race 21 of the bearing 20. Therefore, it is easy to prevent rotational force of the pulley 14 from being transmitted to the tolerance ring 19. Thus, the unbalanced load F is easily and accurately obtained. The durability of the tolerance ring 19 is easily improved.

(4) The compressor C with the tolerance ring 19 is located at a section of the belt 18 at the trailing side of the engine E. The tension pulley 30 is located at a section of the belt 18 at the advancing side of the engine E. Therefore, the controller 28 is capable of obtaining the load torque M0 applied to the engine E by all the auxiliary devices using the equation (2) simply by detecting the tension T1 with the tolerance ring 19 and the tension T3 with the tension pulley 30 and the load cell 31.

The invention may be embodied in the following forms.

In the illustrated embodiment, the tension pulley 30 and the spring 30a apply the tension T3 to the belt 18. However, the tension pulley 30 and the spring 30a may be omitted.

An initial tension T0 is applied to the belt 18, so that friction exists between the belt 18 and the pulleys 14, 17, 29, and that the belt 18 is engaged with the pulleys 14, 17, 29 to transmit torque between the belt 18 and the pulleys 14, 17, 29. When the engine E is not running, the tensions T1, T2, T3, T0 are all equal (T1 = T2 = T3 = T0). The controller 28 is capable of obtaining the initial tension T0 by detecting the tension T1 or the tension T2 when the engine E is not running (either of the tensions T1, T2 is equal to the initial tension T0).

When the engine E is started from a stopped state, the tension T1 of a section of the belt 18 at the trailing side of the crankshaft pulley 17 becomes greater than the initial tension T0, and the tension T3 of a section of the belt 18 at the advancing side of the crankshaft pulley 17 becomes less than the initial tension T0. Thus, the tensions T1, T3 and the initial tension T0 can be approximately expressed by the following equations.

When inequalities $(T0 <) T1 < 2\sqrt{}(T0)$ and $0 < T3 (<T0)$ are satisfied,

$$(\sqrt{}(T1) + \sqrt{}(T3))/2 = \sqrt{}(T0) \qquad\qquad \text{Equation (3)}$$

When an inequality $2\sqrt{}(T0) \leq T1$ is satisfied,

$$T3 = 0 \qquad\qquad \text{Equation (4)}$$

Therefore, the controller 28 is capable of obtaining the tension T3 using one of the equations (3) and (4) based on the tension T1 detected at the compressor pulley 14, and the initial tension T0. The controller 28 then obtains the load torque M0 using the equation (2) based on the obtained tensions T1, T3.

If T3 is canceled in the equations (2) and (3), the load torque M0 is expressed by the following equation.

When inequalities $(T0 <) T1 < 2\sqrt{}(T0)$ and $0 < T3 (<T0)$ are satisfied,

$$M0 = 4 \ (\sqrt{ \ (T0 \cdot T1) } - T0)R0 \hspace{3cm} \text{Equation (5)}$$

Referring to the equations (2) and (4), the load torque M0 is expressed by the following equation.

When an inequality $2\sqrt{(T0)} \leq T1$ is satisfied,

$$M0 = T1 \cdot R0 \hspace{3cm} \text{Equation (6)}$$

Therefore, the controller 28 is capable of obtaining the load torque M0 using one of the equations (5) and (6).

In the above illustrated embodiment, the unbalanced load F is obtained after obtaining the load Fa and the load Fb at two points based on the output data of the strain gauges 26, 27. However, the unbalanced load F may be obtained by the following procedure. That is, the correlation between the output data of the strain gauges 26, 27 at the points and the unbalanced load F is obtained in advance. Without obtaining the loads Fa, Fb at two points, the unbalanced load F is obtained directly from the output data of the strain gauges 26, 27 based on the correlation.

In the illustrated embodiment, the compressor pulley 14 is located at a section of the belt 18 at the trailing side of the crankshaft pulley 17, and the power steering pulley 29 is located at a section of the belt 18 at the advancing side of the crankshaft pulley 17. This configuration may be changed such that the compressor pulley 14 is located at the advancing side of the crankshaft pulley 17, and the power steering pulley is located at the trailing side of the crankshaft pulley 17.

To obtain the load torque M0 applied to the engine E by all the auxiliary devices when the tension pulley 30 and the load cell 31 are provided in the above-mentioned case, the tolerance ring 19 is located between a supporting member that, with a bearing, rotatably supports the power steering pulley 29 and the bearing. The controller 28 obtains at the power steering pulley 29 the tension of a section of the belt 18 at the trailing side of the crankshaft pulley 17 from the output data of the strain gauges 26, 27. The tension at the advancing side of the crankshaft pulley 17 is obtained from the output data of the load cell 31. Based on the obtained tensions, the controller 28 computes the load torque M0. When the tension pulley 30 and the load cell 31 are not provided, the controller 28 detects the initial tension T0 in a state where the engine E is not running, and computes the load torque M0 using one of the equations (5) and (6).

The auxiliary devices receiving torque from the belt 18 are not limited to the compressor C and the power steering unit. However, for example, a hydraulic pump for a brake assisting apparatus, an air pump for an air suspension apparatus, or a water pump may be added to the auxiliary devices so that three or more auxiliary devices receive torque from the belt 18.

To obtain the load torque M0 when the tension pulley 30 and the load cell 31 are provided in the above-mentioned case, the tolerance ring 19 is provided in an auxiliary device corresponding to a section of the belt 18 that is adjacent to and in a trailing section with respect to a section corresponding to the crankshaft pulley 17. Specifically, the tolerance ring 19 is located between a supporting member that, with a bearing, rotatably supports a pulley, or a rotor, of the auxiliary device and the bearing. The controller 28 obtains the tension of a section of the belt 18 at the trailing side of the crankshaft pulley 17 from the output data of the strain gauges 26, 27. Also, the controller 28 obtains the tension of the advancing side of the belt 18 based on the output data of the load cell 31. Based on the obtained tensions, the controller 28 computes the load torque M0. When the tension pulley 30 and the load cell 31 are not provided, the controller 28 computes the load torque M0 using one of the equations (5) and (6).

If each auxiliary device has the tolerance ring 19 and the strain gauges 26, 27, torque for driving each auxiliary device will be computed by the controller 28. Only one auxiliary device may receive torque from the belt 18.

When an idle pulley 33 (shown by broken line in Fig. 4) is provided between the crankshaft pulley 17 and the compressor pulley 14, that is, at the trailing section of the belt 18 with respect to the crankshaft pulley 17, the tolerance ring 19 may be located between a supporting member that, with a bearing, rotatably supports the idle pulley 33 and the bearing.

To obtain the load torque M0 applied to the engine E by all the auxiliary devices when the tension pulley 30 and the load cell 31 are provided in the above-mentioned case, the tension of the belt 18 at the idle pulley 33 is detected, thereby obtaining the tension of a section of the belt 18 at the trailing side of the crankshaft pulley 17, which trailing side tension is equal to the tension at the idle pulley 33. The tension of a section of the belt 18 at the advancing side of the crankshaft pulley 17 is obtained based on the output data of the load cell 31. Accordingly, the load torque M0 is computed. When the tension pulley 30 and the load cell 31 are not provided, the controller 28 computes the load torque M0 using one of the equations (5) and (6).

The strain gauges 26, 27 need not be spaced by 90° interval as long as the strain gauges 26, 27 are located at two different points in the circumferential direction. The number of the strain gauges need not be two, but may be three or more.

The tolerance ring 19 need not be provided in an auxiliary device driven by the belt 18. The tolerance ring 19 may be provided in a power source, which is the engine E driving the belt 18. In this case, the tension T1 of a section of the belt 18 at the trailing side of the crankshaft pulley 17 and the tension T3 of a section of the belt 18 at the advancing side of the crankshaft pulley 17 are obtained, and then, based on the obtained tensions T1 and T3, the load torque M0 of all the auxiliary devices is obtained. For example, the tolerance ring 19 is provided between the housing of the engine E that, with a bearing, rotatably supports the crankshaft of the engine E, and the outer race of the bearing.

The deformation member need not be annular like the tolerance ring 19, but may be a C-shaped member that is formed by removing a part of the tolerance ring 19. The deformation member may comprise discontinuous members that support the bearing 20 relative to the boss 13 as long as the discontinuous members support the bearing 20 arranged at intervals less than 180° in the circumferential direction.

The endless loop power transferring member does not need to be a belt, and rotors with which such a member is engaged do not need to be pulleys. For example, the endless loop power transferring member maybe a chain, and the rotors may be sprockets.

The present invention does not necessarily applied to a drive source (the engine E) of a vehicle and auxiliary devices. However, the present invention may be applied to endless loop power transferring members other than ones used in vehicles. Specifically, the present invention may be applied to a case where torque is transmitted from a power source such as an electric motor to rotary machines through an endless loop power transferring member.

The present examples and embodiments are to be considered as illustrative and not restrictive and the invention is not to be limited to the details given herein, but may be modified within the scope and equivalence of the appended claims.

A deformation member is located between a supporting member and a bearing. A deformation detection device detects the amount of deformation of the deformation member at at least two positions that are spaced from each other in a circumferential direction. Based on the deformation amount, a computer computes unbalanced load that is applied to the supporting member by the tension of a belt. The computer computes tension of an advancing section and tension of a trailing section of the belt in the moving direction of the belt with respect to a section of the belt engaged with a rotor. Therefore, the strength of the supporting member is maintained while improving the detection accuracy.

## Claims

1.  A tension detection apparatus for detecting tension acting on an endless loop power transferring member that transfers torque from a drive source to at least one driven device, the apparatus comprising:

    a supporting member;
    a bearing attached to the supporting member; and
    a rotor rotatably supported by the supporting member with the bearing in between, wherein the power transferring member is engaged with the rotor, the apparatus being **characterized by:**

    a deformation member located between the supporting member and the bearing, wherein the amount of deformation of the deformation member varies in accordance with the tension of the power transferring member;
    a deformation detection device, wherein the deformation detection device detects the deformation amount of the deformation member at at least two positions that are spaced from each other in a circumferential direction of the bearing; and
    a computer, wherein, based on the deformation amount detected by the deformation detection device, the computer computes an unbalanced load that is applied to the supporting member by the tension of the endless loop power transferring member through the rotor, the bearing, and the deformation member, and wherein, based on the computed unbalanced load, the computer computes the tension acting on the endless power transferring member.

2.  The apparatus according to claim 1, **characterized in that** the deformation detection device includes a pair of deformation sensors.

3.  The apparatus according to claim 2, **characterized in that** the deformation member is an annular member having a plurality of curved portions, wherein the curved portions protrude radially outward and are arranged in a circumferential direction of the annular member, and wherein the deformation sensors are each located in one of spaced two of the curved portions, respectively.

**EP 1 471 339 A2**

**4.** The apparatus according to claim 3, **characterized in that** the deformation member is a tolerance ring.

**5.** The apparatus according to any one of claims 1 to 4, **characterized in that** the bearing is a roller bearing including an inner race, an outer race, and rolling bodies located between the races, and wherein the rotor is attached to one of the inner and outer races, and the deformation member is located between the supporting member and the other one of the inner and outer races.

**6.** The apparatus according to any one of claims 1 to 5, **characterized in that** the deformation member and the deformation detection device are provided at the driven device.

**7.** The apparatus according to claim 6, **characterized in that** the rotor includes a pulley that is coupled to a rotary shaft of the driven device such that the pulley rotates integrally with the rotary shaft, wherein the power transferring member is engaged with the pulley, wherein a housing of the driven device has a boss through which the rotary shaft extends, the boss functioning as the supporting member, and wherein, about the boss, the deformation member, the bearing, and the pulley are arranged in this order in a radially outward direction.

**8.** The apparatus according to any one of claims 1 to 7, **characterized in that** the driven device is a compressor including a gas compression mechanism driven by the rotor.

**9.** The apparatus according to any one of claims 1 to 5, **characterized in that** the deformation member and the deformation detection device are provided at the drive source.

**10.** The apparatus according to any one of claims 1 to 5, **characterized in that** the power transferring member is engaged with an idle pulley, the idle pulley functioning as the rotor, wherein the deformation member and the deformation detection device are located between the supporting member and the bearing which rotatably support the idle pulley.

**11.** A torque detection apparatus for detecting torque transmitted to a driven device by a drive source through an endless loop power transferring member, wherein the driven device has a housing and a rotor, wherein the rotor is rotatably supported by the housing with a bearing, and wherein the power transferring member is engaged with the rotor, the apparatus being **characterized by:**

a deformation member located between the housing and the bearing, wherein the amount of deformation of the deformation member varies in accordance with the tension of the power transferring member;
a deformation detection device, wherein the deformation detection device detects the deformation amount of the deformation member at at least two positions that are spaced from each other in a circumferential direction of the bearing; and
a computer, wherein, based on the deformation amount detected by the deformation detection device, the computer computes unbalanced load that is applied to the housing by the tension of the power transferring member through the rotor, the bearing, and the deformation member, wherein, based on the computed unbalanced load, the computer computes tension of an advancing section and tension of a trailing section of the power transferring member in the moving direction of the power transferring member with respect to the rotor, and wherein, based on the difference between the computed tensions, the computer computes the torque.

**12.** The apparatus according to claim 11, **characterized in that** the driven device is a compressor including a gas compression mechanism driven by the rotor.

**13.** A torque detection apparatus for detecting torque transmitted to an endless loop power transferring member by a drive source, the apparatus comprising:

a supporting member;
a bearing attached to the supporting member;
a rotor rotatably supported by the supporting member with the bearing in between, wherein the power transferring member is engaged with the rotor; the apparatus being **characterized by:**

a deformation member located between the supporting member and the bearing, wherein the amount of deformation of the deformation member varies in accordance with the tension of the power transferring member;

8

a deformation detection device, wherein the deformation detection device detects the deformation amount of the deformation member at at least two positions that are spaced from each other in a circumferential direction of the bearing; and

a computer, wherein, based on the deformation amount detected by the deformation detection device, the computer computes unbalanced load that is applied to the housing by the tension of the power transferring member through the rotor, the bearing, and the deformation member, wherein, based on the computed unbalanced load, the computer computes at least one of tension of an advancing section and tension of a trailing section of the power transferring member in the moving direction of the power transferring member with respect to the drive source.

**14.** The apparatus according to claim 13, **characterized in that** the power transferring member transfers the torque to a driven device, wherein the driven device is located adjacent to the drive source and in the trailing section, and wherein the deformation member and the deformation detection device are provided at the driven device;

wherein a tension applying mechanism is located adjacent to the drive source and in the advancing section, wherein the apparatus further includes an applied force detection device for detecting force applied to the power transferring member by the tension applying mechanism, and

wherein the computer computes the tension of the trailing section based on the deformation amount detected by the deformation detection device, and the computer computes the tension of the advancing section based on the applied force detected by the applied force detection device, and wherein, based on the difference between the computed tensions, the computer computes the torque.

**15.** The apparatus according to claim 13, **characterized in that** a driven device to which the torque is transmitted by the drive source through the power transferring member is located adjacent to the drive source and in the trailing section, wherein a section of the power transferring member between the drive source and the driven device is engaged with an idle pulley, the idle pulley functioning as the rotor, and wherein the deformation member and the deformation detection device are located between the supporting member and the bearing which rotatably support the idle pulley,

wherein a tension applying mechanism is located adjacent to the drive source and in the advancing section, wherein the apparatus further includes an applied force detection device for detecting force applied to the power transferring member by the tension applying mechanism, and

wherein the computer computes the tension of the trailing section based on the deformation amount detected by the deformation detection device, and the computer computes the tension of the advancing section based on the applied force detected by the applied force detection device, and wherein, based on the difference between the computed tensions, the computer computes the torque.

**16.** The apparatus according to claim 13, **characterized in that** the deformation member and the deformation detection device are provided at the drive source, and

wherein the computer computes the both tensions based on the deformation amount detected by the deformation detection device, and wherein, based on the difference between the computed tensions, the computer computes the torque.

**17.** The apparatus according to any one of claims 11 to 16, **characterized in that** the deformation member is a tolerance ring.

# Fig.1A    Fig.1

**Fig.2**

Compression Mechanism

Controller

Engine

P

C

E

10

EP 1 471 339 A2

# Fig.3

# Fig.4

EP 1 471 339 A2